# EUROPÄISCHE PATENTSCHRIFT

(11) **EP 3 880 406 B1**
(45) Veröffentlichungstag und Bekanntmachung des Hinweises auf die Patenterteilung: **14.09.2022**
(21) Anmeldenummer: 19790569.8
(22) Anmeldetag: 29.10.2019
(51) Int. Cl.: B25F 5/00, F16H 57/04

(54) **HANDWERKZEUGMASCHINE**
HANDHELD MACHINE TOOL
MACHINE-OUTIL PORTATIVE

(30) Priorität: 13.11.2018 EP 18205861
(43) Veröffentlichungstag der Anmeldung: 22.09.2021
(73) Patentinhaber: Hilti Aktiengesellschaft, 9494 Schaan (LI)
(72) Erfinder: HINTERSTOISSER, Michael, 82140 Olching (DE); ERHARDT, Jochen, 86836 Klosterlechfeld (DE)
(74) Vertreter: Hilti Aktiengesellschaft Corporate Intellectual Property
(86) Internationale Anmeldenummer: PCT/EP2019/079525
(87) Internationale Veröffentlichungsnummer: WO 2020/099123

(56) Entgegenhaltungen:
- JP-A- 2003 278 847
- JP-A- 2003 278 894
- US-A- 5 480 362

## Beschreibung

### GEBIET DER ERFINDUNG

Die vorliegende Erfindung betrifft eine Handwerkzeugmaschine mit einem Planetengetriebe. Die Drehzahl eines Elektromotors wird durch das Planetengetriebe untersetzt und so an eine gewünschte Drehzahl eines Werkzeughalters angepasst. Die einzelnen bewegten Komponenten des Planetengetriebes werden mit einem Schmierstoff benetzt, um die Reibung und Verschleiß zu verringern. Fliehkräfte bedingt durch das rotierenden Hohlrad erschweren eine zuverlässige Zuführung und Dosierung des Schmierstoffs im Bereich der Planetenräder.

Aus der JP 2003 278847 A ist eine Handwerkzeugmaschine gemäß dem Oberbegriff des Anspruchs 1 bekannt. Aus der JP 2003 278894 A ist eine weitere Handwerkzeugmaschine bekannt.

### OFFENBARUNG DER ERFINDUNG

Die erfindungsgemäße Handwerkzeugmaschine verbessert die Schmierung der Planetenräder.

Die Handwerkzeugmaschine hat einen Werkzeughalter zum Haltern eines Werkzeugs, einen Handgriff zum Halten und Führen der Handwerkzeugmaschine, einen Elektromotor, und einen Antriebsstrang. Der Antriebsstrang koppelt den Elektromotor mit dem Werkzeughalter. Der Antriebsstrang enthält ein Planetengetriebe mit einem Planetenträger und mehreren Planetenrädern. Wenigstens eines der Planetenräder weist eine zylindrische Ausnehmung auf und der Planetenträger hat einen in die Ausnehmung vorstehenden kreisbogen-förmigen Kragen.

Die Ausnehmung in dem Planetenrad und der in die Ausnehmung eingreifende Kragen bilden eine effektive Barriere für den Schmierstoff, welcher der Fliehkraft entgegenwirkt.

Eine Ausgestaltung hat ein Planetenlager für das wenigstens eine Planetenrad, wobei der Kragen in einem radialen Abstand zu dem Planetenlager angeordnet ist. Ferner kann das Planetengetriebe ein Hohlrad aufweisen, wobei der Kragen zwischen dem Hohlrad und dem Planetenlager angeordnet ist.

Eine bevorzugte Ausgestaltung sieht vor, dass der Kragen wenigstens 120 Grad des Planetenlagers umschließt und höchstens 240 Grad des Planetenlagers umschließt. Der Schmierstoff kann durch den offenen Bereich gleich einem Tor eintreten und wird durch die Kragen am Verlassen gehindert.

Bei einer Ausgestaltung sind der Planetenträger um eine Hauptachse drehbar gelagert und das wenigstens eine Planetenrad um eine Lagerachse drehbar gelagert. Der Planetenträger hat einen von der Hauptachse zu der Lagerachse verlaufenden Kanal. Der Schmierstoff kann über die Hauptachse zugeführt und per Fliehkraft in dem Planetengetriebe verteilt werden. Der Kanal kann einen Hof aufweisen.

### KURZE BESCHREIBUNG DER FIGUREN

Die nachfolgende Beschreibung erläutert die Erfindung anhand von exemplarischen Ausführungsformen und Figuren. In den Figuren zeigen:
- Fig. 1: einen Elektroschrauber
- Fig. 2: ein Planetengetriebe
- Fig. 3: einen Längsschnitt durch das Planetengetriebe

Gleiche oder funktionsgleiche Elemente werden durch gleiche Bezugszeichen in den Figuren indiziert, soweit nicht anders angegeben.

### AUSFÜHRUNGSFORMEN DER ERFINDUNG

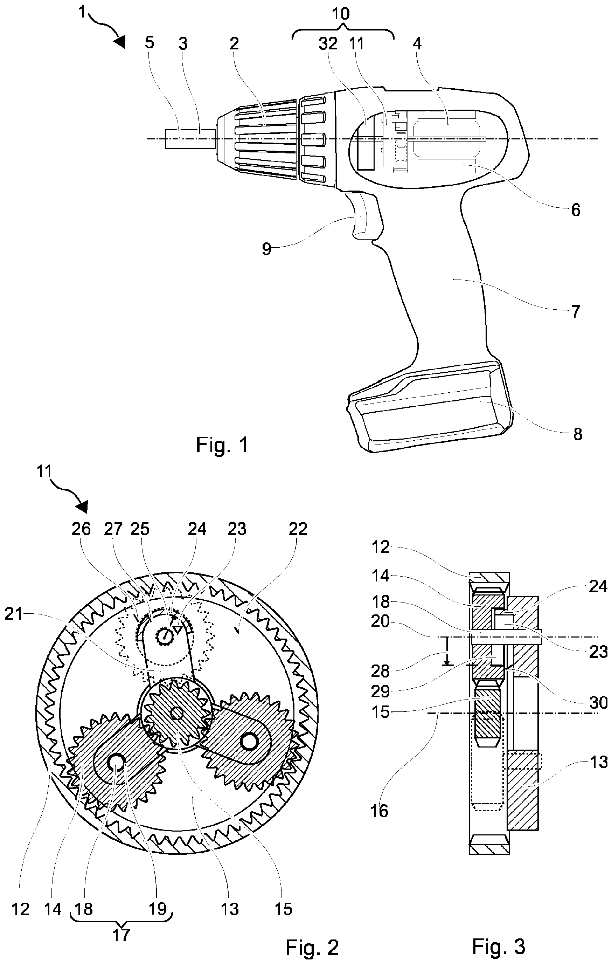

Fig. 1 zeigt als Beispiel für eine Handwerkzeugmaschine **1** einen Elektroschrauber. Die Handwerkzeugmaschine **1** hat einen Werkzeughalter **2** zum Haltern eines Werkzeugs **3.** Das Werkzeug **3** ist beispielsweise ein Schrauberbit, ein Bohrer oder ein Schleifkopf. Der Anwender kann das Werkzeug **3** in den Werkzeughalter **2** einsetzen und vorzugsweise per Hand verriegeln. Der Werkzeughalter **2** wird durch einen Elektromotor **4** angetrieben. In dem dargestellten Beispiel wird der Werkzeughalter **2** um eine Arbeitsachse **5** drehend angetrieben.

Die Handwerkzeugmaschine **1** hat ein Maschinengehäuse **6** und einen Handgriff **7.** Der Handgriff **7** ist mit dem Maschinengehäuse **6** unlösbar verbunden. Der Anwender kann die Handwerkzeugmaschine **1** an dem Handgriff **7** halten und die Handwerkzeugmaschine **1** im Betrieb führen. Der Handgriff **7** hat vorzugsweise eine die Hand angepasste ergonomische Form. Der Handgriff **7** ist mit einem Maschinengehäuse **6** verbunden, in welchem der Elektromotor **4** angeordnet ist. Ein Batteriepaket **8** zum Versorgen des Elektromotors **4** ist an dem Maschinengehäuse **6** lösbar befestigt. Alternativ kann der Elektromotor **4** via Netzanschluss versorgt werden. Die Handwerkzeugmaschine **1** hat einen Betriebstasters **9,** welcher vorzugsweise an dem Handgriff **7** angeordnet ist. Der Anwender kann die Handwerkzeugmaschine **1** durch Betätigen des Betriebstasters **9** in Betrieb nehmen. Typischerweise ist der Betriebstaster **9** monostabil und muss gedrückt gehalten werden, ansonsten schaltet sich die Handwerkzeugmaschine **1** ab.

Der Werkzeughalter **2** ist über einen Antriebsstrang **10** mit dem Elektromotor **4** verbunden. Der Antriebsstrang **10** beinhaltet ein Planetengetriebe **11.** Das Planetengetriebe **11** kann Drehzahl und Drehmoment des Elektromotors **4** an die gewünschte Drehzahl und das gewünschte Drehmoment für das Werkzeug **3** anpassen. Das beispielhafte Planetengetriebe **11** untersetzt die Drehzahl.

Das Planetengetriebe **11** hat eine Getriebestufe, welche ein Hohlrad **12,** einen Planetenträger **13,** mehrere Planetenräder **14** und ein Sonnenrad **15** beinhaltet. Auch wenn sich die nachfolgende Beschreibung auf das Planetengetriebe **11** mit nur einer Getriebestufe beschränkt, können mehrere dieser Getriebestufen oder anderen Getriebestufen in Serie geschaltet sein.

Das Planetengetriebe **11** hat eine Hauptachse **16,** zu welcher das Hohlrad **12,** der Planetenträger **13** und das Sonnenrad **15** koaxial angeordnet sind. Der Planetenträger **13** ist unabhängig von dem Hohlrad **12** und dem Sonnenrad **15** um die Hauptachse **16** drehbar gelagert. Hohlrad **12** und Sonnenrad **15** liegen vorzugsweise in einer Ebene. Das Hohlrad **12** und Sonnenrad **15** sind nicht direkt in Eingriff und um die Hauptachse **16** relativ zueinander drehbar gelagert. Der Planetenträger **13** ist vorzugweise längs der Hauptachse **16** gegenüber dem Hohlrad **12** und dem Sonnenrad **15** versetzt angeordnet. Der Planetenträger **13** ist um die Hauptachse **16** drehbar gelagert und weder mit dem Hohlrad **12** noch dem Sonnenrad **15** in direktem Eingriff. Der Planetenträger **13** kann demzufolge gegenüber dem Hohlrad **12** und dem Sonnenrad **15** gedreht werden. Eine Kopplung zwischen Hohlrad **12,** Planetenträger **13** und Sonnenrad **15** erfolgt durch die drei oder mehr Planetenräder **14.** Die drei oder mehr Planetenräder **14** sind zwischen dem Hohlrad **12** und dem Sonnenrad **15** in deren Ebene angeordnet. Die Planetenräder **14** greifen sowohl in das Hohlrad **12** als auch das Sonnenrad **15** ein und übertragen somit ein Drehmoment von dem Hohlrad **12** auf das Sonnenrad **15** und vice versa. Die Planetenräder **14** sind auf einer (vorderen) Stirnseite **17** des Planetenträgers **13** gelagert. Die Planetenräder **14** sind um ihre (Planeten-) Achsen **18** drehbar in Planetenlagern **19** gelagert. Die Planetenlager **19** sind auf dem Planetenträger **13** angeordnet. Die Planetenlager **19** sind gegenüber der Hauptachse **16** radial versetzt. In dem dargestellten Beispiel sind die Planetenlager **19** mittig zwischen dem Hohlrad **12** und dem Sonnenrad **15** angeordnet. Die ortsfeste Anbindung der Planetenachsen **18** an den Planetenträger **13** bewirkt, dass diese bei einer Drehbewegung des Planetenträgers **13** um die Hauptachse **16** exzentrisch um die Hauptachse **16** mitbewegt werden. Der Planetenträger **13** kann angekoppelt über die Planetenräder **14** ein Drehmoment auf das Hohlrad **12** und das Sonnenrad **15** übertragen und vice versa.

In der dargestellten Ausführungsform ist das Planetengetriebe **11** antriebsseitig mit dem Sonnenrad **15** an den Elektromotor **4** angekoppelt und abtriebsseitig mit dem Planetenträger **13** an den Werkzeughalter **2** angekoppelt. Die Anordnung ist nur beispielhaft. Hohlrad **12,** Planetenträger **13** und Sonnenrad **15** können je nach gewünschten Übersetzungsverhältnis, Bauform, und anderen Überlegungen als abtriebsseitig oder antriebsseitig verwendet werden. Ferner kann das jeweils dritte dieser Elemente mit dem Maschinengehäuse **6** drehfest gekoppelt sein, freidrehend um die Hauptachse **16** sein oder über eine Bremse oder einen Schaltmechanismus mit dem Maschinengehäuse **6** gekoppelt sein. Die dargestellten Zähne und deren Anzahl dienen der Illustration und entsprechend nicht notwendigerweise einem realen Übersetzungsverhältnis.

Das dargestellte Planetenlager **19** beinhaltet einen Lagerzapfen **20** an dem Planetenträger **13** und eine Nabe **21** in dem Planetenrad **14.** Der Lagerzapfen **20** steht von der vorderen Stirnseite **17** des Planetenträger **13** in Richtung zu der Ebene von Hohlrad **12** und Sonnenrad **15** vor. Der Lagerzapfen **20** ist versetzt zu der Hauptachse **16** entfernt angeordnet. In dem Beispiel ist der Lagerzapfen **20** mittig zwischen dem Hohlrad **12** und dem Sonnenrad **15** angeordnet. Eine (Lager-) Achse **18** des Lagerzapfens **20** ist parallel zu der Hauptachse **16.** Der Lagerzapfen **20** kann starr mit dem Planetenträger **13** verbunden sein oder um die Lagerachse **18** drehbar in dem Planetenträger **13** gelagert sein. Die Nabe **21** des Planetenrads **14** sitzt drehbar auf dem Lagerzapfen **20.** In einer Ausgestaltung kann die Nabe **21** starr mit dem Lagerzapfen **20** verbunden sein, wobei der Lagerzapfen **20** um die Lagerachse **18** in dem Planetenträger **13** drehbar gelagert ist.

Der Planetenträger **13** hat radial verlaufende Kanäle **22,** die von der Hauptachse **16** zu den Planetenlagern **19** verlaufen. Die Kanäle **22** sind als Vertiefungen in der vorderen Stirnseite **17** des Planetenträgers **13** eingebracht. Eine Tiefe der Kanäle **22** ist geringer als eine Breite der Kanäle **22,** damit diese mit herkömmlichen Sinterverfahren hergestellt werden können. Das Aspektverhältnis von Tiefe zu Breite ist vorzugsweise geringer als 1:3. Tiefe bezeichnet die Abmessung entlang der Hauptachse **16** und Breite eine Abmessung die sowohl senkrecht zur Verbindungslinie von Hauptachse **16** zu Lagerachse **18** und senkrecht zur Tiefe erfasst wird.

Das Planetenlager **19** liegt vorzugsweise innerhalb des Kanals **22.** Ein Ende des Kanals **22** bildet einen ringförmigen Hof **23,** welcher den Lagerzapfen **20** umgibt. Der Hof **23** kann kreisförmig ausgebildet sein. Der Hof **23** ist gegenüber der vorderen Stirnseite **17** vertieft.

Der Planetenträger **13** hat zu jedem Planetenlager **19** einen kreisbogen-förmigen Kragen **24.** Der Kragen **24** steht längs der Hauptachse **16** gegenüber der vorderen Stirnseite **17** vor. Der Kragen **24** kann sich unmittelbar an den Hof **23** anschließen. Der Kragen **24** verläuft in einem radialen Abstand **25** zu der Lagerachse **18.** Die zylindrische Achse des Kragens **24** und die Lagerachse **18** fallen entsprechend zusammen. Der Kragen **24** hat eine von der Lagerachse **18** abgewandte (Außen-) Fläche **26** und eine dem Kragen **24** zugewandte (Innen-) Fläche **27.** Bei dem beispielhaft dargestellten Kragen **24** sind Außenfläche **26** und Innenfläche **27** zylindrisch. Eine Stärke, d.h. Abstand **25** von Außenfläche **26** zu Innenfläche **27,** des Kragens **24** ist konstant. In einer anderen Ausgestaltung ist die Außenfläche **26** weiterhin ein Abschnitt eines Zylinders mit dem Radius **28** um die Lagerachse **18,** während die Innenfläche **27** eine andere vorzugsweise konkave Form aufweist und beabstandet zu der Lagerachse **18** ist.

Der Kragen **24** ist in radialer Richtung zwischen dem Hohlrad **12** und dem Planetenlager **19** angeordnet. Ein mittlerer Abstand des Kragens **24** zu der Hauptachse **16** ist entsprechend größer als der Abstand der Lagerachse **18** zu der Hauptachse **16.** Der Kragen **24** deckt einen Winkelabschnitt von wenigstens 120 Grad, z.B. wenigstens 150 Grad, z.B. wenigstens 175 Grad ab. Vorzugsweise deckt der Kragen einen Winkelabschnitt von weniger als 240 Grad, z.B. weniger als 210 Grad, z.B. weniger als 185 Grad ab. Der Kragen kann spiegelsymmetrisch zu der Verbindungslinie zwischen Hauptachse **16** und Lagerachse **18** angeordnet sein. Der Kragen **24** hat eine Öffnung in Richtung zu dem Sonnenrad **15.** Eine Höhe des Kragens **24** ist geringer der Radius **28,** vorzugsweise mit einem Aspektverhältnis kleiner 1:3. Die Höhe bezeichnet die Abmessung längs der Hauptachse **16.**

Die Planetenräder **14** können identisch ausgebildet sein. Die Beschreibung beschränkt sich exemplarisch auf eines der Planetenräder **14.** Das Planetenrad **14** hat eine dem Planetenträger **13** zugewandte (hintere) Stirnseite **29.** Zwischen der vorderen Stirnseite **17** des Planetenträgers **13** und der hinteren Stirnseite **29** des Planetenrads **14** ist ein Luftspalt. Die beiden Stirnflächen berühren einander nicht.

Das Planetenrad **14** hat eine zylindrische Ausnehmung **30** an der hinteren Stirnseite **29.** Die zylindrische Ausnehmung **30** hat einen Radius **28,** der dem radialen Abstand **25** des Kragens **24** zu der Lagerachse **18** entspricht. Eine Tiefe **31** der Ausnehmung **30** entspricht der Höhe des Kragens **24.** Der Kragen **24** ragt in die Ausnehmung **30** des Planetenrads **14** hinein. Die radialen Abmessungen sind mit einem Spiel bemessen, so dass das Planetenrad **14** den Kragen **24** nicht berührt. Das Planetenlager **19** ist vorzugsweise allein durch den Lagerzapfen **20** und die Nabe **21** gebildet.

Das Planetenlager **19** wird durch einen Schmierfilm benetzt. Der Schmierstoff wird durch die Zentrifugalkraft von der Hauptachse **16** zu den Lagerzapfen **20** gefördert. Der Kragen **24** und die zylindrische Ausnehmung **30** bilden für das Schmiermittel eine effektive Barriere, welche ein Wegschleudern von dem Planetenlager **19** aufgrund der Zentrifugalkraft hemmt. Die Benetzung der Hauptachse **16** kann durch ein Reservoir von Schmierstoff außerhalb des Planetengetriebes **11** erfolgen.

Das dargestellte Planetengetriebe **11** ist mit dem Sonnenrad **15** antriebsseitg und dem Planetenträger **13** abtriebsseitig dargestellt. In anderen Ausgestaltungen kann eines von Sonnenrad **15,** Planetenträger **13** und Hohlrad **12** antriebsseitig mit dem Elektromotor **4** gekoppelt sein. Eines der beiden verbleibenden von Sonnenrad **15,** Planetenträger **13** und Hohlrad **12** ist abtriebsseitig mit dem Werkzeughalter **2** gekoppelt. Das dargestellte Planetengetriebe **11** beinhaltet nur eine Getriebestufe. In alternativen Ausführungsformen können mehrere Planetenstufen verschaltet sein. Jede der Planetenstufen kann einen Planetenträger **13** mit dem beschriebenen Kragen **24** und entsprechende Planetenräder **14** mit der zylindrischen Ausnehmung **30** aufweisen.

Die Verwendung des Planetengetriebes **11** in dem dargestellten Elektroschrauber ist beispielhaft. Andere Handwerkzeugmaschinen mit dem Planetengetriebe umfassen Bohrmaschinen, Bohrhammer, Meißelhämmer, Kreissägen, Stichsägen, Pendelhubsägen, Trennschleifer, etc.. Der Antriebsstrang **10** kann dem Planetengetriebe **11** vorgeschaltete oder nachgeschaltete andere Antriebskomponenten **32.** Beispiele für die Antriebskomponenten sind eine Rutschkupplung, eine Tangentialschlagwerk, ein elektropneumatisches Schlagwerk, ein Pendelhubmechanismus, weitere Getriebsstufen, etc.. Der Werkzeughalter **2** überträgt auf das Werkzeug **3** je nach Antriebsstrang **10** eine kontinuierlich drehende Bewegung, eine pulsartig drehende Bewegung, eine axial schlagende Bewegung, eine pendelnde Bewegung oder eine Überlagerung der genannten Bewegungen.

## Patentansprüche

1. Handwerkzeugmaschine mit
einem Werkzeughalter (2) zum Haltern eines Werkzeugs (3),
einem Handgriff (7) zum Halten und Führen der Handwerkzeugmaschine (1),
einem Elektromotor (4),
einem Antriebsstrang (10), welcher den Elektromotor (4) mit dem Werkzeughalter (2) koppelt, wobei der Antriebsstrang (10) ein Planetengetriebe (11) mit einem Planetenträger (13) und mehreren Planetenrädern (14) enthält,
**dadurch kennzeichnet, dass** wenigstens eines der Planetenräder (14) eine zylindrische Ausnehmung (30) aufweist und der Planetenträger (13) einen in die Ausnehmung (30) vorstehenden kreisbogen-förmigen Kragen (24) aufweist.

2. Handwerkzeugmaschine (1) nach Anspruch 1, **gekennzeichnet durch** ein Planetenlager (19) für das wenigstens eine Planetenrad (14), wobei der Kragen (24) in einem radialen Abstand (25) zu dem Planetenlager (19) angeordnet ist.

3. Handwerkzeugmaschine (1) nach Anspruch 2, **dadurch gekennzeichnet, dass** das Planetengetriebe (11) ein Hohlrad (12) aufweist und dass der Kragen (24) zwischen dem Hohlrad (12) und dem Planetenlager (19) angeordnet ist.

4. Handwerkzeugmaschine (1) nach Anspruch 3, **dadurch gekennzeichnet, dass** der Kragen (24) wenigstens 120 Grad des Planetenlagers umschließt und höchstens 240 Grad des Planetenlagers (19) umschließt.

5. Handwerkzeugmaschine (1) nach einem der vorhergehenden Ansprüche, wobei der Planetenträger (13) um eine Hauptachse (16) drehbar gelagert ist und das wenigstens eine Planetenrad (14) um eine Lagerachse (18) drehbar gelagert ist, **dadurch gekennzeichnet, dass** der Planetenträger (13) einen von der Hauptachse (16) zu der Lagerachse (18) verlaufenden Kanal (22) aufweist.

6. Handwerkzeugmaschine (1) nach Anspruch 5, **dadurch gekennzeichnet, dass** der Kanal (22) einen Hof (23) aufweist.

## Claims

1. Portable power tool having
a tool holder (2) for retaining a tool (3),
a handle (7) for holding and guiding the portable power tool (1),
an electric motor (4),
a drive train (10) that couples the electric motor (4) to the tool holder (2), wherein the drive train (10) contains a planetary transmission (11) with a planet carrier (13) and a plurality of planet gears (14),
**characterized in that** at least one of the planet gears (14) has a cylindrical cutout (30) and the planet carrier (13) has a collar (24) in the form of a circular arc that protrudes into the cutout (30).

2. Portable power tool (1) according to Claim 0, **characterized by** a planet bearing (19) for the at least one planet gear (14), wherein the collar (24) is arranged at a radial distance (25) from the planet bearing (19).

3. Portable power tool (1) according to Claim 0, **characterized in that** the planetary transmission (11) has a ring gear (12), and **in that** the collar (24) is arranged between the ring gear (12) and the planet bearing (19).

4. Portable power tool (1) according to Claim 0, **characterized in that** the collar (24) encloses at least 120 degrees of the planet bearing and encloses at most 240 degrees of the planet bearing (19).

5. Portable power tool (1) according to one of the preceding claims, wherein the planet carrier (13) is mounted so as to be rotatable about a main axis (16) and the at least one planet gear (14) is mounted so as to be rotatable about a bearing axis (18), **characterized in that** the planet carrier (13) has a channel (22) extending from the main axis (16) to the bearing axis (18).

6. Portable power tool (1) according to Claim 0, **characterized in that** the channel (22) has a void (23).

## Revendications

1. Outil à main motorisé, comprenant
un porte-outil (2) pour retenir un outil (3),
une poignée (7) pour tenir et guider l'outil à main motorisé (1),
un moteur électrique (4),
une chaîne cinématique (10) qui accouple le moteur électrique (4) au porte-outil (2), la chaîne cinématique (10) comportant un engrenage planétaire (11) pourvu d'un porte-satellites (13) et de plusieurs satellites (14),
**caractérisé en ce qu'**au moins l'un des satellites (14) présente un évidement cylindrique (30), et le porte-satellites (13) présente un collet (24) en arc de cercle faisant saillie dans l'évidement (30).

2. Outil à main motorisé (1) selon la revendication 1, **caractérisé par** un roulement de satellite (19) pour ledit au moins un satellite (14), le collet (24) étant disposé à une distance radiale (25) par rapport au roulement de satellite (19).

3. Outil à main motorisé (1) selon la revendication 2, **caractérisé en ce que** l'engrenage planétaire (11) présente une couronne (12), et **en ce que** le collet (24) est disposé entre la couronne (12) et le roulement de satellite (19).

4. Outil à main motorisé (1) selon la revendication 3, **caractérisé en ce que** le collet (24) enferme au moins 120 degrés du roulement de satellite et au maximum 240 degrés du roulement de satellite (19).

5. Outil à main motorisé (1) selon l'une quelconque des revendications précédentes, dans lequel le porte-satellites (13) est monté en rotation autour d'un axe principal (16), et ledit au moins un satellite (14) est monté en rotation autour d'un axe de roulement (18), **caractérisé en ce que** le porte-satellites (13) présente un canal (22) s'étendant de l'axe principal (16) à l'axe de roulement (18).

6. Outil à main motorisé (1) selon la revendication 5, **caractérisé en ce que** le canal (22) présente un halo (23).
